## Europäisches Patentamt
## European Patent Office
## Office européen des brevets

(11) Numéro de publication : **0 069 025**
**B1**

(12) # FASCICULE DE BREVET EUROPÉEN

(45) Date de publication du fascicule du brevet :
**30.01.85**

(21) Numéro de dépôt : **82420023.2**

(22) Date de dépôt : **18.02.82**

(51) Int. Cl.⁴ : **B 01 J 19/14//** F26B23/02, B63B57/04, B65D90/44

(54) **Procédé d'élaboration d'un gaz inerte ou d'un gaz neutre et installation pour son obtention.**

(30) Priorité : **12.06.81 FR 8112059**

(43) Date de publication de la demande :
**05.01.83 Bulletin 83/01**

(45) Mention de la délivrance du brevet :
**30.01.85 Bulletin 85/05**

(84) Etats contractants désignés :
**AT BE CH DE GB IT LI LU NL SE**

(56) Documents cités :
**DE-A- 2 310 794**
**DE-A- 2 502 107**
**FR-A- 2 305 228**
**GB-A- 1 492 400**
**MARINE ENGINEERING AND SHIPBUILDING AB-STRACTS, vol.79, no.2, février 1967, Londres (GB), "Inert gas freeing system", page 32**

(73) Titulaire : **SOCIETE BBM S.A.**
**39-41, rue du 8 mai 1945**
**F-69320 Feyzin (FR)**

**S.N.I.G. FEYZIN s.a.**
**211, avenue Francis de Préssencé**
**F-69200 Vénissieux (FR)**

(72) Inventeur : **Bo, Ermanno**
**Chemin de Monte Ferrand Ternay**
**F-69360 St Symphorien d'Ozon (FR)**

(74) Mandataire : **Schmitt, John**
**Cabinet John Schmitt 9, rue Pizay**
**F-69001 Lyon (FR)**

## Description

La présente invention a pour objet un procédé permettant d'obtenir un gaz inerte ou un gaz neutre destiné à des opérations de dégazage ou d'inertage, ou de séchage par exemple, mais non exclusivement.

On connaît actuellement plusieurs dispositifs qui permettent la fabrication de gaz inertes ou neutres par une succession d'opérations : combustion, refroidissement, égouttage. Un tel dispositif est décrit dans le brevet FR-A-2.305.228 qui comprend un système de refroidissement à plusieurs étages et un échangeur de chaleur incorporé à la chambre de combustion. Les fumées produites par la combustion d'hydrocarbures et mélangées à de la vapeur d'eau, sont instables et on en ignore la composition exacte. Ce manque de précision sur la teneur chimique des fumées traitées entraîne une production de gaz qui n'ont pas les qualités requises pour leurs destinations.

Pour pallier ces inconvénients on a imaginé un procédé mis en œuvre au moyen d'une installation simple, pratique, fixe ou amovible ou encore mobile transportée par des véhicules utilitaires et qui permet de produire par combustion stœchiométrique un gaz neutre ou un gaz avec un excès d'air de zéro à 2 % de façon à réduire le pourcentage d'oxygène dans le gaz neutre dans une proportion choisie de quelques P.P.M.

L'invention telle qu'elle est caractérisée dans les revendications propose un procédé d'élaboration et d'obtention d'un gaz inerte ou d'un gaz neutre qui utilise deux recyclages au cours des opérations suivantes :
— craquage d'un gaz de combustion ;
— combustion du mélange craqué ;
— ou combustion par mélange ;
— premier refroidissement par dilution au moyen d'une partie du gaz prélevée sur la production de gaz neutre en cours de fabrication ;
— deuxième refroidissement par passage du gaz produit au contact d'un échangeur à eau douce, refroidie et recyclée ;
— troisième refroidissement par passage du gaz à travers un plateau perforé à mèches, par exemple, permettant un lit d'eau, ou bien par passage du gaz sur un échangeur thermique à circulation d'eau douce ;
— quatrième refroidissement par aspersion du gaz au moyen d'une rample d'eau ou bien passage du gaz sur un échangeur à groupe réfrigérant ;
— élimination des substances liquides contenues dans le gaz au moyen d'un séparateur.

Pour répondre à certains besoins industriels ou critères d'utilisation, le gaz obtenu, qui présente encore 100 % d'humidité relative, peut être :
— séché par dessication fonctionnant par absorption ou réfrigération ;
— surchauffé pour livraison à la température désirée.

Ces différentes opérations nécessitent des appareils qui constituent l'installation pour l'obtention du gaz suivant le procédé et qui comprend :
— un dispositif de ventilation, à un ou à deux ventilateurs suivant le type de brûleur choisi assorti d'un filtre et d'un silencieux ; un brûleur ; une chambre de craquage ; une chambre de combustion ; une chambre de mélange et de dilution pour le premier refroidissement ; un échangeur gaz neutre-eau douce pour le deuxième refroidissement ; un séparateur primaire d'eau ; une colonne de refroidissement comportant un plateau perforé permettant au moins un lit d'eau assurant le troisième refroidissement ; des rampes d'aspersion pour le quatrième refroidissement et un séparateur linéaire ou centrifuge pour éliminer les substances liquides encore en suspension dans le gaz neutre ; ou bien, et à la place, pour assurer le troisième refroidissement un échangeur thermique à eau douce couplé avec celui assurant le deuxième refroidissement puis, pour le quatrième refroidissement passage du gaz dans un groupe réfrigérant qui pourrait aussi être un autre échangeur thermique ; des appareils de régulation communes aux différentes manières de refroidir le gaz mais adaptés aux cas considérés et comprenant, depuis l'entrée et tout au long de l'installation toutes les vannes de sectionnement, robinets de réglage, vannes automatiques électro-vannes, régulateurs de débit, contrôleurs de flamme, de température, de pression, analyseur ; des canalisations et tuyauteries, dont une équipée d'un by-pass, des extracteurs, une soupape de démarrage ou de rejet en cas de combustion incorrecte ; une pompe immergée dans le bac d'eau douce et offrant toute sécurité, pour alimenter le circuit fermé du deuxième refroidissement ; un récupérateur de calories eau chaude ; un récupérateur de calories gaz chaud ; un générateur d'eau douce ; éléments nécessaires à la sécurité de l'ensemble avec alertes, de types traditionnels. Cette installation est complétée par des appareils de dessiccation et de réchauffage du gaz neutre pour des cas particuliers d'utilisation. La dessiccation se fait par absorption ou par réfrigération, tandis que le réchauffage a lieu dans un surchauffeur. A la sortie et dans tous les cas, la tuyauterie qui dirige le gaz neutre vers l'utilisation ou le stockage est munie d'un extracteur et d'un clapet à eau ce dernier destiné à interdire le retour du gaz dans l'installation.

Dans ce qui suit l'invention est exposée plus en détail à l'aide de dessins représentant seulement un mode d'exécution :
la figure 1 représente schématiquement une installation suivant l'invention ;
la figure 2 représente schématiquement l'installation précédente complétée par un appareil de dessiccation et un surchauffeur du gaz neutre produit ;
la figure 3 représente schématiquement une variante de réalisation dans laquelle les 3ᵉ et 4ᵉ refroidissements ne sont pas effectués dans une colonne spéciale.

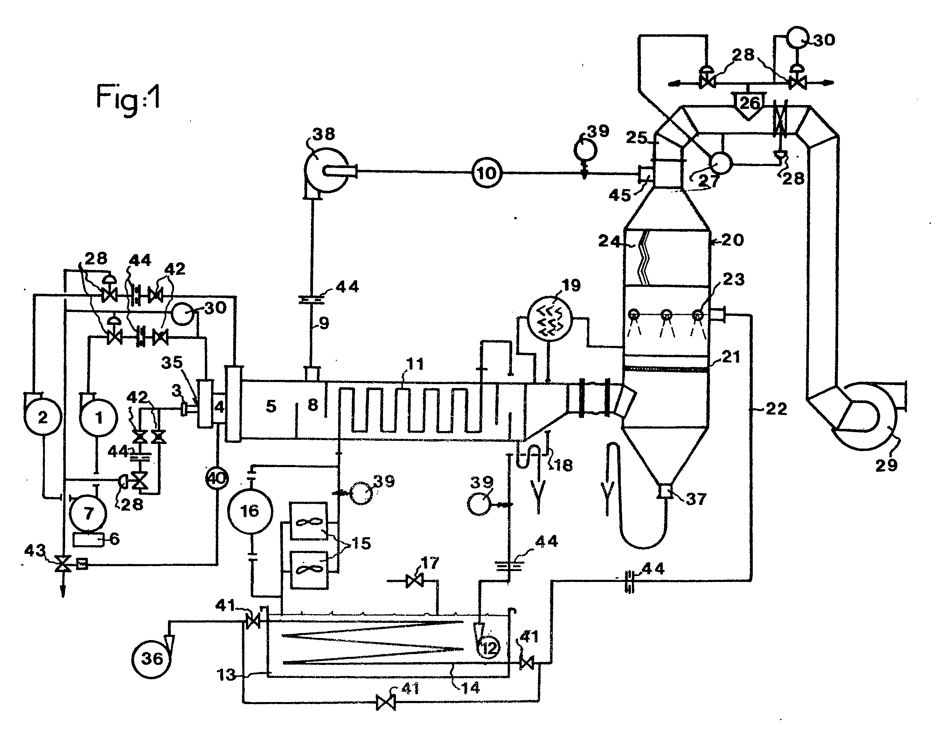

L'installation schématisée sur la figure 1 comprend un dispositif de ventilation équipé d'un ventilateur d'air primaire 1 permettant de craquer le gaz de combustion dans la chambre 4 d'un ensemble horizontal comparable à une chaudière et d'un ventilateur d'air secondaire 2 permettant de brûler le mélange craqué dans la chambre suivante dite de combustion 5 ou foyer. Le gaz carburant peut être du propane, du butane, de l'éthylène, du propylène, notamment mais non exclusivement.

Dans l'exemple de réalisation décrit on a choisi le propane pour alimenter le brûleur 3 de sorte que les températures qui seront précisées correspondront par conséquent à ce type de carburant. Le brûleur 3 peut être immergé ce qui permet, quand on le désire, d'avoir des fumées à température moins élevée. Un filtre 6 et un silencieux 7 sont placés à l'aspiration des ventilateurs 1 et 2 afin de débarrasser au mieux l'air pulsé de toutes particules indésirables.

On peut également envisager une combustion classique par mélange avec un seul ventilateur.

La combustion du mélange craqué s'effectue dans la chambre 5 à une température de 1 400 °C. Le gaz résultant de cette combustion s'engage dans la chambre de mélange et de dilution 8 qui succède à la chambre 5 et où aboutit une tuyauterie 9 d'arrivée de gaz neutre produit par l'installation elle-même. Cette arrivée de gaz commandée par un by-pass 10 passe par un ventilateur extracteur 38 de recyclage monté dans un ensemble étanche de façon à interdire toute entrée d'air extérieur. Elle a pour but de réaliser un premier refroidissement du gaz produit dans la chambre 5 dont la température est ainsi abaissée de 1 400 °C à 900 °C. Le gaz poursuit se progression et côtoie un échangeur 11 provoquant un deuxième refroidissement du gaz amené à 400 °C après son passage sur l'échangeur 11 lequel se situe toujours dans l'enceinte horizontale, contient de l'eau douce prélevée au moyen d'une pompe immergée 12 dans un bac 13, alimentant ainsi un circuit fermé dont le recyclage est constant. L'eau du bac 13 est avantageusement refroidie par un serpentin 14 d'eau de mer ou d'eau industrielle dont la température est d'environ 15 °C et qui provient d'une pompe immergée 36. Deux aéroréfrigérants 15 fonctionnent également pour refroidir l'eau de la canalisation qui va à l'échangeur 11. Pour utiliser les calories abandonnées par le circuit d'eau douce on a prévu d'intercaler dans cette zone un récupérateur 16 qui peut être employé pour réchauffer du gaz liquéfié ou bien simplement de l'eau d'une installation sanitaire quelconque.

Bien entendu un contrôleur de niveau automatique 17 compense un manque d'eau douce dans le bac 13 et commande un robinet d'appoint qui peut être en rapport avec un circuit de récupération 18 de l'eau de condensation produite par la combustion et situé après l'échangeur 11, en bout de l'appareil, au niveau d'un séparateur primaire 19 chargé d'éliminer cette eau de condensation.

Le gaz neutre arrive à 400 °C dans la colonne de refroidissement 20 qui contient différents organes ; le gaz traverse au moins un plateau perforé 21 surmonté d'un caillebotis, détails non représentés sur le schéma. Cette disposition favorise la formation de « mousse d'eau » industrielle, ou eau de mer, alimentée par des rampes 23 au moyen d'une conduite 22 amenant l'eau au serpentin 14 immergé dans le bac 13. Cette mousse est formée d'eau, de vapeur d'eau, du gaz en suspension et de condensats.

Le gaz traverse ce lit de mousse d'eau, subissant ainsi un troisième refroidissement suivi immédiatement par le quatrième provoqué par une aspersion par gravité à partir des rampes 23 susmentionnées.

Ces rampes peuvent être remplacées par des plateaux à contre-courant ou des plateaux d'anneaux à grande surface, à la manière connue.

Dans cette zone la température du gaz neutre est descendue à 30 °C environ. Il est alors séparé des substances liquides qu'il contient par un séparateur linéaire 24, centrifuge ou autre. En haut de la colonne de refroidissement 20 le gaz neutre a une température de 30 °C et contient 100 % d'humidité relative. La tuyauterie 25 qui surmonte la colonne de refroidissement 20 dispose d'un piquage 45 par lequel s'effectue un prélèvement partiel du gaz neutre pour alimenter, par l'intermédiaire du by-pass 10 et de l'extracteur de recyclage 38, la chambre de mélange et de dilution 8 au moyen de la tuyauterie 9 comme expliqué précédemment. La tuyauterie 25 comporte différents coudes et dispose d'une ouverture 26 vers l'extérieur munie de deux vannes automatiques 28 l'une commandée par un contrôleur de pression 30 et l'autre par un analyseur 27 en rapport avec le gaz circulant dans la tuyauterie 25. Cette ouverture 26 permet le démarrage et les réglages de l'installation, d'éviter les surpressions ou encore d'assurer la mise à l'air éventuelle d'un gaz dont la teneur en oxygène n'est pas conforme aux besoins, cette teneur ayant été décelée par l'analyseur 27 situé en amont de l'ouverture 26.

En aval de cette ouverture 26 le gaz neutre contient 100 % d'humidité relative et est dirigé vers l'utilisateur ou le stockage à travers un extracteur 29 et un clapet de sécurité à eau anti-retour. Au bas de la colonne de refroidissement 20 on a prévu une évacuation 37 de l'eau industrielle ou eau de mer distribuée par les rampes 23.

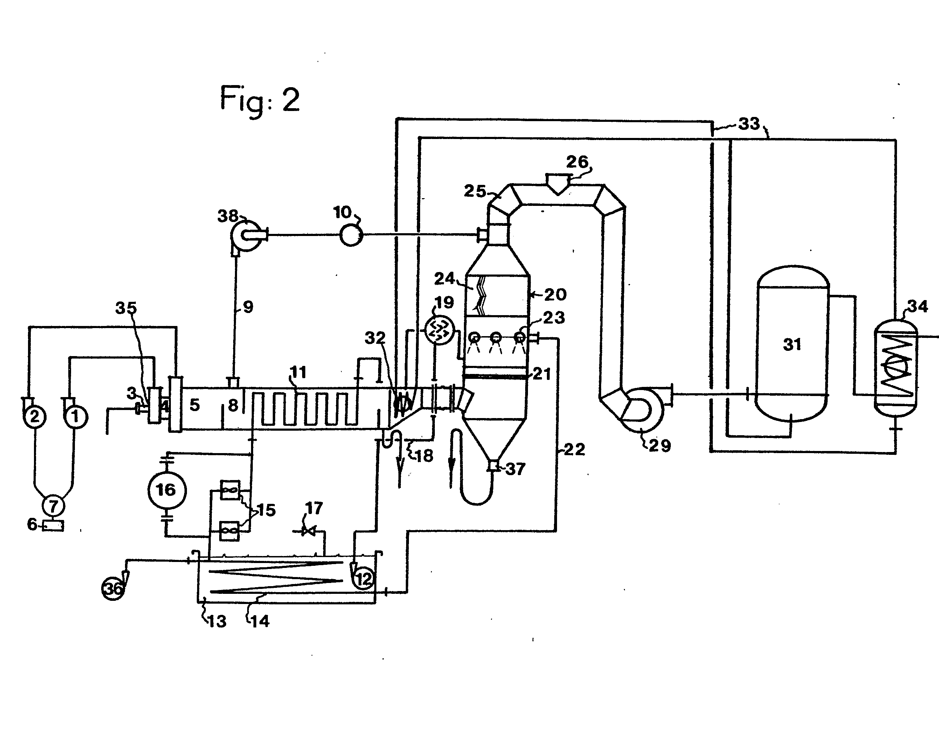

Lorsque le gaz neutre ainsi produit doit être débarrassé des 100 % d'humidité relative constatée, on complète l'installation par un appareil de dessiccation 31, figure 2, qui fonctionne soit par absorption soit par réfrigération.

En cas de fonctionnement par absorption l'absorbant peut être régénéré par le sécheur 32 en rapport avec le système de dessiccation 31 par des canalisations 33.

D'autre part, le gaz neutre peut être remis à une température souhaitée, par son passage dans un surchauffeur 34 par exemple jusqu'à 400 °C si nécessaire. A cet effet le surchauffeur 34 est également relié au sécheur 32 par les canalisations 33. On retrouve en bout de tuyau de sortie vers l'utilisateur un clapet de sécurité à eau, anti-retour.

Pour pouvoir brûler des gaz malodorants ou dangereux dont le rejet à l'atmosphère est interdit on a prévu un piquage 35 au niveau de la combustion.

On remarque que la figure 1 est complétée par le schéma d'implantation des appareils de régulation minimum tels que : vannes automatiques 28, contrôleurs de pression 30, de température 39, de flamme 40, vannes de sectionnement 41, robinets de réglage 42, électro-vannes 43, la régulation de débit étant assurée par tout dispositif approprié 44.

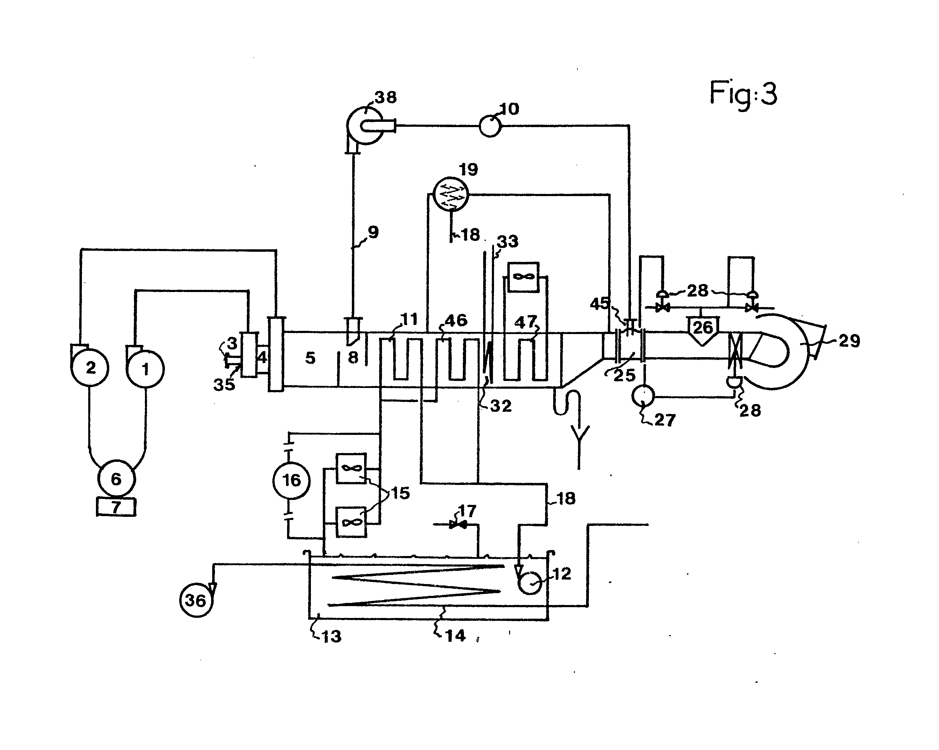

Dans la variante de l'installation schématisée sur la figure 3 on remarque que les opérations de craquage, combustion du mélange craqué, premier et second refroidissements sont conservés. Mais le troisième refroidissement succède immédiatement au second, avec lequel il est couplé puisqu'il s'agit aussi d'un refroidissement thermique contraignant le gaz à côtoyer un échangeur 46 contenant de l'eau douce recyclée en permanence, le quatrième refroidissement contraint le gaz à côtoyer un échangeur à groupe réfrigérant 47. Au terme de ce circuit la température du gaz est abaissée aux environs de 20 °C, pratiquement à la température ambiante.

Dans ce cas particulier le gaz est orienté dès sa sortie du cône de la chaudière dans la tuyauterie 25 qui comporte, à l'image de celle représentée figure 1 un piquage 45 point de départ d'une tuyauterie 9 assortie d'un by-pass 10 et d'un extracteur ventilateur 38 monté dans un ensemble étanche à l'air, ladite tuyauterie 9 en entrant dans la chaudière au niveau de la chambre de dilution 8 assurant le recyclage du gaz produit, dans le but de réaliser le premier refroidissement comme expliqué précédemment. A partir et en aval du piquage 45 on retrouve exactement les mêmes éléments appareils et fonctionnement que ceux décrits et illustrés sur les figures 1 et 2.

Le gaz neutre ou inerte ainsi élaboré sert au dégazage, à l'inertage, au séchage :

a) Le gaz neutre à 20 °C et 100 % d'humidité relative est utilisé sur les navires méthaniers pétroliers pour le stockage de produits chimiques, sur les camions citernes, les wagons citernes, tous les matériels servant au transport de matières dangereuses ou malodorants en phase gazeuse.

b) Le gaz neutre à 20 °C et 10° d'humidité relative a les mêmes utilisations que le précédent mais pour des matières périssables et pouvant être dégradées par l'humidité, céréales, fruits.

c) Le gaz neutre chaud à 10° d'humidité relative est employé au superséchage des matériels cités au paragraphe a, également en menuiserie.

Dans le cas où le gaz produit passe par la colonne de refroidissement 20 il se purifie notamment par dissolution dans l'eau de certains éléments par exemple le gaz carbonique de sorte qu'à son arrivée à la bouche d'utilisation 29 le gaz est très voisin de l'azote et présente un degré de pureté appréciable et peut répondre ainsi à des critères particuliers d'utilisation.

On peut aussi envisager un autre domaine d'application du procédé objet de l'invention, réaliser une chaudière pour le chauffage d'eau à usage domestique ou industriel, utilisant le recyclage des fumées pour en récupérer les calories par échange thermique et pour en abaisser sensiblement la température par dilution.

Il va de soi que des modifications peuvent être apportées au dispositif qui vient d'être décrit, notamment par substitution de moyens techniques équivalents, sans que l'on sorte pour autant du cadre de la présente invention.

## Revendications

1. Procédé pour obtenir par combustion stœchiométrique un gaz inerte ou un gaz neutre, consistant à opérer successivement le craquage d'un gaz de combustion, une combustion du mélange craqué ou une combustion par mélange, plusieurs refroidissements par dilution et/ou échange thermique et/ou barbotage et/ou aspersion, un égouttage par séparation, un séchage et un réchauffage ou un séchage seulement, caractérisé par le fait qu'un premier refroidissement s'effectue par apport de gaz neutre produit par le procédé ; qu'un deuxième refroidissement s'effectue par le passage du gaz sur un échangeur qui est un circuit fermé d'eau douce ; qu'un troisième refroidissement s'effectue par le passage du gaz à travers le lit d'eau ou de mousse d'eau d'au moins un plateau perforé ; qu'un quatrième refroidissement est réalisé par aspersion du gaz au moyen de rampes d'eau industrielle ou d'eau de mer ; qu'un égouttage du gaz neutre s'effectue par séparation linéaire ou centrifuge des gouttelettes.

2. Procédé suivant la revendication 1, caractérisé par le fait que le troisième refroidissement s'effectue par le passage du gaz sur un échangeur thermique contenant de l'eau douce recyclée en permanence ; que le quatrième refroidissement s'opère par le passage du gaz sur un échangeur thermique à groupe réfrigérant ou encore sur un autre échangeur thermique à eau douce.

3. Procédé suivant l'une quelconque des revendications 1 et 2, caractérisé par le fait que la température du gaz est modifiée par passage dans un surchauffeur.

4. Installation pour l'élaboration et la production d'un gaz inerte suivant le procédé des revendications 1 à 3, comprenant un dispositif de ventilation équipé de deux ventilateurs (1) et (2), un brûleur (3), une chambre de craquage (4), une chambre de combustion ou foyer (5), une chambre de dilution (8), un échangeur thermique (11), une colonne de refroidissement (20), une conduite (25) du gaz vers l'utilisation, un appareil de dessiccation (31) et un surchauffeur (34), caractérisée par le fait que la chambre de dilution (8) est reliée à un piquage (45) prévu à la sortie de la colonne de refroidissement (20), ou prévu en bout de la chaudière sur la tuyauterie (25) au moyen d'une canalisation (9) comportant un extracteur (38) et un by-pass (10).

5. Installation pour l'élaboration et la production d'un gaz neutre suivant les revendications 1 à 3, comprenant un dispositif de ventilation équipé de deux ventilateurs (1) et (2), un brûleur (3), une chambre de craquage (4), une chambre de combustion ou foyer (5), une chambre de dilution (8), un échangeur thermique (11), un deuxième et un troisième échangeurs thermiques (46) respectivement (47), une conduite (25) du gaz vers l'utilisation, un appareil de dessiccation (31) et un surchauffeur (34), caractérisée par le fait que les échangeurs thermiques (11) et (46) communiquent avec un bac (13) réservoir d'eau douce, contenant un serpentin (14) d'eau industrielle ou d'eau de mer alimenté par une pompe immergée (36), qu'une pompe (12) immergée dans le bac (13) alimente les échangeurs (11) et (46) et que des aéroréfrigérants (15) sont montés sur le circuit retour de l'eau douce au bac (13).

6. Installation suivant les revendications 1 à 5 caractérisée par le fait que la colonne de refroidissement (20) comprend au moins un plateau perforé (21) et un caillebotis surmontés d'un jeu de rampes d'aspersion (23) reliées au serpentin (14) immergé dans le bac (13) par une tuyauterie (22), ainsi qu'un séparateur linéaire ou centrifuge (24).

7. Installation suivant les revendications 1 à 5, caractérisée par le fait qu'une mise à l'air (26) est piquée dans la tuyauterie (25), qu'un analyseur (27) est prévu en amont et qu'une vanne automatique (28) est prévue en aval sur la tuyauterie (25).

8. Installation suivant les revendications 1 à 5, caractérisée par le fait que sur le circuit retour de l'eau douce issue des échangeurs (11) et (46) est prévu un récupérateur (16) de calories.

9. Installation suivant les revendications 1 à 5, caractérisée par le fait qu'un récupérateur d'eau douce (19) est prévu en fin de circuit du gaz produit, en aval de sa sortie de la chaudière.

10. Installation suivant les revendications 1 à 5, caractérisée par le fait que l'appareil de dessiccation (31) à absorption est régénéré par un sécheur (32) piqué avant l'entrée du gaz dans la colonne de refroidissement (20) et conduit par des canalisations (33) ou piqué dans la chaudière entre les échangeurs thermiques (46) et (47).

**Claims**

1. A process for obtaining an inert gas or a neutral gas by stoechiometric combustion, consisting in carrying out successively cracking of a combustion gas, combustion of the cracked mixture or combustion by mixing, several coolings by dilution and/or heat exchange and/or bubbling and/or spraying, separation draining, drying and heating or drying only, characterized by the fact that a first cooling is achieved by feeding neutral gas produced by the process ; that a second cooling is achieved by passing gas over an exchanger which is a closed soft water circuit ; that a third cooling is achieved by passing gas through the bed of water or water foam of at least one perforated plate ; that a fourth cooling is achieved by spraying water on the gas by means of industrial water or sea water ramps ; that draining of the neutral gas takes place by linear or centrifugal separation of the droplets.

2. The process according to claim 1, characterized by the fact that the third cooling is achieved by passing gas over a heat exchanger containing permanently recycled soft water ; that the fourth cooling takes place by passing gas over a heat exchanger with cooling unit or else over another soft water heat exchanger.

3. The process according to any one of claims 1 and 2, characterized by the fact that the temperature of the gas is modified by passing through a super heater.

4. An installation for forming and producing an inert gas according to the process of claims 1 to 3, comprising a ventilating device equipped with two blowers (1) and (2), a burner (3), a cracking chamber (4), a combustion chamber or hearth (5), a dilution chamber (8), a heat exchanger (11), a cooling column (20), a duct (25) feeding gas to the user apparatus, a desiccating apparatus (31) and a super heater (34), characterized by the fact that the dilution chamber (8) is connected to a tapping (45) provided at the outlet of the cooling column (20) or provided at the end of the boiler on the piping (25) by means of a duct (9) comprising an extractor (38) and a by-pass (10).

5. An installation for forming and producing a neutral gas according to claims 1 to 3, comprising a ventilation device equipped with two blowers (1) and (2), a burner (3), a cracking chamber (4), a combustion chamber or hearth (5), a dilution chamber (8), a heat exchanger (11), second and third heat exchangers (46) respectively (47), a duct (25) feeding gas to the user apparatus, a desiccation apparatus (34) and a superheater (34), characterized by the fact that the heat exchanger (11) and (46) communicate with a reserve tank (13) of soft water, containing an industrial water or sea water coil fed by a submerged pump (36) that a submerged pump (12) in the tank (13) supplies the exchangers (11) and (46) and that air coolers (15) are mounted in the return circuit of the soft water to the tank (13).

6. The installation according to claims 1 to 5, characterized by the fact that the cooling column (20) comprises at least one perforated plate (21) and a grating over which is mounted a set of spraying ramps (23) connected to the coil (15) immersed in the tank (13) by a pipe (22) as well as a linear or centrifugal separator (24).

7. The installation according to claims 1 to 5, characterized by the fact that a vent (26) is tapped in the pipe (25), that an analyzer (27) is provided upstream and that an automatic valve (28) is provided downstream in the pipe (25).

8. The installation according to claims 1 to 5, characterized by the fact that a heat recovering means (16) is provided in the return circuit for the soft water coming from the exchangers (11) and (46).

9. The installation according to claims 1 to 5, characterized by the fact that a soft water recovery means (19) is provided at the end of the circuit of the gas produced, downstream of its outlet from the boiler.

10. The installation according to claims 1 to 5, characterized by the fact that the absorption desiccation apparatus (31) is regenerated by a drier (32) connected before the inlet of gas into the cooling column (20) and fed by pipes (33) or connected to the boiler between the heat exchangers (46) and (47).

**Ansprüche**

1. Verfahren zur Erzielung eines Inertgases bzw. eines Neutralgases durch stöchiometrische Verbrennung welches darin besteht, nacheinander das Kracken eines Verbrennungsgases, eine Verbrennung der Krackmischung bzw. eine Verbrennung durch Vermischung, mehrere Abkühlvorgänge durch Verdünnung und/oder Wärmeaustausch und/oder Durchblasung und/oder Benetzung, ein Abtropfen durch Abscheidung, eine Trocknung und eine Anheizung bzw. lediglich eine Trocknung durchzuführen, dadurch gekennzeichnet, dass die erste Abkühlung durch Hinzufügung eines mit dem Verfahren produzierten Neutralgases erfolgt, dass eines zweite Abkühlung mittels des Durchfiessens des Gases durch einen Austauscher, welcher aus einem geschlossenen Süsswasserkreislauf besteht, stattfindet, dass eine dritte Abkühlung mittels des Durchfliessens des Gas durch ein Wasserbett bzw. durch ein Wasserschaumbett mit mindestens einer gelochten Platte vorgenommen wird, dass eine vierte Abkühlung durch Benetzung des Gases mit Brauchwasser- bzw. Meerwasserrampen erfolgt und dass ein Abtropfen des Neutralgases durch eine lineare bzw. eine zentrifugale Abscheidung der Tropfen stattfindet.

2. Verfahren gemäss dem Anspruch 1, dadurch gekennzeichnet, dass die dritte Abkühlung mittels des Durchfliessens des Gas durch einen Wärmeaustauscher, welcher ein ständig wiederaufbereitetes Süsswasser enthält, erfolgt, und dass die vierte Abkühlung mittels des Durchfliessens des Gases durch einen Wärmeaustauscher mit einem Kühlaggregat bzw. durch einen weiteren Wärmeaustauscher mit Süsswasser stattfindet.

3. Verfahren gemäss irgendeinem der Ansprüche 1 und 2, dadurch gekennzeichnet, dass die temperatur des Gases mittels des Durchfliessens durch einen Überhitzer verändert wird.

4. Anlage zur Aufbereitung und zur Produktion eines Inertgases gemäss dem Verfahren der Ansprüche 1 bis 3 mit einer Lüftungsanlage, die mit zwei Ventilatoren (1) und (2), einem Brenner (3), einer Krackkammer (4), einer Verbrennungskammer bzw. Verbrennungsraum (5), einer Verdünnungskammer (8), einem Wärmeaustauscher (11), einer Abkühlunssäule (20), einer Leitung (25) für das Gas bis zur Verwendungsstelle, einem Austrocknungsgerät (31) und einem Überhitzer (34) versehen ist, dadurch gekennzeichnet, dass die Verdünnungskammer (8) mit einer Stichleitung (45), die am Ausgang der Abkühlungssäule (20) bzw. am Ende des Kessels an der Rohrleitung (25) über eine Kanalisierung (9) mit einem Extraktor (38) und einer By-pass-Leitung (10) vorgesehen ist, verbunden ist.

5. Anlage zur Aufbereitung und zur Produktion eines Neutralgases gemäss den Ansprüchen 1 bis 3, die mit einer Lüftungsanlage mit zwei lüftern (1) und (2), einem Brenner (3), einer Krackkammer (4), einer Verbrennungskammer bzw. Verbrennungsraum (5), einer Verdünnungskammer (8), einem Wärmeaustauscher (11), einem zweiten und einem dritten Wärmeaustauscher (46) bzw. (47), einer Leitung (25) für das Gas bis zur Verwendunsstelle, einem Austrocknungsgerät (31) und einem Überhitzer (34) versehen ist, dadurch gekennzeichnet, dass die Wärmeaustauscher (11) und (46) mit einem Süsswasserbehälter (13), der mit einer durch eine Tauchpumpe (36) versorgte Rohrschlange (14) für Brauchwasser bzw. für Meerwasser versehen ist, verbunden sind, dass sine in das Gefäss (13) eintauchende Pumpe (12) die Austauscher (11) und (46) versorgt und dass sich Luftkühler (15) im Rücklaufkreislauf des Süsswassers zum Behälter (13) befinden.

6. Anlage gemäss den Ansprüchen 1 bis 5, dadurch gekennzeichnet, dass die Abkühlungssäule (20) mindestens mit einer gelochten Platte (21) und mit einem Gitterrost mit einem darüberliegenden Benetzungsrampensatz (23), der mit der Kühlschlange (14) verbunden ist, welche über eine Rohrleitung (22) in das Gefäss (13) eintaucht, ebenso wie mit einem linearen bzw. zentrifugalen Abscheider (24) versehen ist.

7. Anlage gemäss den Ansprüchen 1 bis 5, dadurch gekennzeichnet, dass eine Entlüftung (26) an der Rohrleitung (25) angezapft ist, dass davor ein Analysator (27) vorgesehen ist und dass sich danach in der Rohrleitung (25) ein automatisches Ventil (28) befindet.

8. Anlage gemäss den Ansprüchen 1 bis 5, dadurch gekennzeichnet, dass ein Kalorienrekuperator (16) im Rücklaufkreislauf des aus dem Wärmeaustauschern (11) und (46) kommenden Süsswassers vorgesehen ist.

9. Anlage gemäss den Ansprüchen 1 bis 5, dadurch gekennzeichnet, dass am Ende des Kreislaufes des produzierten Gases, nach dessen Austritt aus dem Kessel, ein Süsswasserrekuperator (19) vorgesehen ist.

10. Anlage gemäss den Ansprüchen 1 bis 5, dadurch gekennzeichnet, dass der Absorptionstrockenapparat (31) durch einen Trockner (32), der vor dem Eintritt des Gases in die Abkühlungssäule (20) abgezapft und durch Rohrleitungen (33) geführt bzw. im Kessel zwischen den Wärmeaustauschern (46) und (47) abgezapft wird, regeneriert wird.

Fig:1

Fig: 2

Fig:3